## Europäisches Patentamt
## European Patent Office
## Office européen des brevets

(19)

(11) Publication number: **0 075 898**
**A2**

(12) **EUROPEAN PATENT APPLICATION**

(21) Application number: **82108867.1**

(22) Date of filing: **24.09.82**

(51) Int. Cl.³: **B 31 F 1/20**
**B 32 B 27/08**

(30) Priority: **25.09.81 IT 2415481**

(43) Date of publication of application:
**06.04.83 Bulletin 83/14**

(84) Designated Contracting States:
**BE DE FR GB NL SE**

(71) Applicant: **Montedison S.p.A.**
Patents & Licensing Dept. Foro Buonaparte, 31 P.O. Box 10528
I-20121 Milan(IT)

(72) Inventor: **Credali, Lino**
22, Via Calari
Casalecchio di Reno Bologna(IT)

(72) Inventor: **Martini, Emilio**
82, Via Altopiano
Pontecchio Marconi Bologna(IT)

(72) Inventor: **Lori, Domenico**
15, Via Agnelli
Ferrara(IT)

(74) Representative: **Barz, Peter, Dr. et al,**
Patentanwälte Dr. V. Schmied-Kowarzik Dipl.-Ing. G.
Dannenberg Dr. P. Weinhold Dr. D. Gudel Dipl.-Ing. S.
Schubert Dr. P. Barz Siegfriedstrasse 8
D-8000 München 40(DE)

(54) **Process for preparing cardboards of the undulated type by using thermoplastic polymer fibres.**

(57) An undulated or corrugated type cardboard is prepared by using for the liners and for the undulated or corrugated layer composite sheets made of at least two layers, one of cellulose and the other, adhering to the former, of a fibrous material consisting for at least 5% by weight of fibres of a synthetic thermoplastic material, the "liner" being superimposed, by the side of its cellulose layer, onto the tips or crests of the waves consisting of layers of cellulose fibres, with the interposition between the liner and said wave tips of a thermoplastic polymer film of a particular vicosity, surface tension and solubility parameter characteristics and by heating up the whole, preferably under pressure, at a temperature comprised between a temperature greater by 10°C than the melting temperature of the polymer of said film, and a temperature greater by 20°C than the melt temperature of the thermoplastic polymer constituting the synthetic fibres.

EP 0 075 898 A2

- 1 -

The present invention concerns a process for the preparation of cardboards of the corrugated type, endowed with a high resistance to humidity, by using for the purpose thermoplastic polymer fibres.

According to a process already known to the Prior Art, as described in Belgian Patent No. 866,781 in the name of the same Applicant, it is possible to obtain a cardboard of the above described type by using as paper to form the "liners" (or flat covers) and the undulated element, synthetic thermoplastic fibre sheets or sheets made of mixtures of cellulose fibres with said thermoplastic fibres. Said sheets may be heat-treated in order to melt at least part of the thermoplastic fibres.

Such a heat treatment may be carried out in the absence of pressure, for instance in a hot-air tunnel, or by means of I.R. lamps, and possibly followed up by a compression stage; or else it may be achieved by a contemporaneous pressure, for instance, by operating on cylinder calanders, on which the pressure may be exerted by one of the cylinders; or in flat-plate discontinuous presses, or on continuous ribbon presses, with a pressure value of at least 0.1 $kg/cm^2$ in the calander cylinder presses, and with at least 0.1 $kg/cm^2$ on the plate or ribbon presses.

In the case in which the sheets are used for producing the undulated or corrugated surface of the cardboard, they are thermoformed on suitably heated embossed or fluted cylinders which form the so-called "undulating group", well known to the skilled in the Art of corrugated cardboard manufacturing, even of the traditional type.

...

- 3 -

The cylinders of the undulating or corrugating group work in general at temperatures greater than the temperature at which the thermoplastic polymer, constituting the synthetic fibres present in the sheets, plasticizes or becomes soft, wherefore the sheets may acquire in a permanent way the required undulated structure.

In general, the first of the liners that form the undulated cardboard, is welded onto the tips of the wave in the undulating or corrugating group itself by thermofusion of the thermoplastic fibres contained in said liner, while the second liner is welded to the opposite tips of the wave in a separated operation.

The thermowelding and heat-treatment of the sheets, in particular of the sheet that constitutes the wave, with the consequencial fusion (melting) of the thermoplastic fibres therein contained, allow to obtain a corrugated-type cardboard of high mechanical properties under humidity.

In the realization of this process there are met, however, considerable practical difficulties or drawbacks during the stage of the thermo-welding of the liners to the wave, whether said welding is applied by the corrugating or undulating group or by hot plates, because of the high operational temperatures which, in general, are by $20^{\circ}C$ to $30^{\circ}C$ greater than the melt-temperature of the thermoplastic polymer present in the liners, wherefore these latter tend to cause a certain degrading of the cellulose and, in the specific case of the operation with heated plates, they will cause the collaps of the undulation at the minimum pressure requested (about 40 $g/cm^2$).

...

- 3 -

It has now been found by the same Applicants, and it forms the object of this invention, a process that will allow the preparation of an undulated-type cardboard by using a thermoplastic polymeric material, with the possibility of achieving the thermo-adhesion of the "liners" to the wave element at relatively low temperatures, such as to avoid the greatest part or to altogether eliminate the aforesaid drawbacks.

Said process consists in using, as constituents of the wave and of the liners, sheets consisting of or comprising two superimposed layers, one being made of cellulose fibres, while the other, adhering to the former, is made of a fibrous material, at least 5% by weight of which is made up a thermoplastic synthetic polymer; in then putting the "liner" into contact, by means of the layer of cellulose fibres, with the tips or peaks of the wave formed by the layer of cellulose fibres, with interposed between the liner and above said tips a thermoplastic polymer film having the hereunder defined characteristics; and in finally heating up, prefer-ably under a certain pressure, the composite product thus obtained, at least in correspondence with the contact points of the "liner" with the tips or peaks of the waves, at a temperature comprised between a temperature greater by $10^{\circ}C$ than the melting or fusing temperature of the thermoplastic polymer constituting the film, and a temperature greater by $20^{\circ}C$ than the melting temperature of the thermoplastic polymer that constitutes the synthetic fibres present both in the "liner" as well as in the wave.

The thermoplastic polymer that forms the film to be

. . .

- 4 -

interposed between the layer of cellulose fibres of the liner and the tips or peaks of the wave, must possess the following characteristics:

(a)   a melt temperature lower than the melt temperature of the polymer forming the synthetic thermoplastic fibres present in the layers adhering to the layers of cellulosic fibres of the liner and of the wave, and destined to adhere, and between which is inserted the film;

(b)   a viscosity in the molten state, measured in a capillary viscosimeter, under a velocity gradient equal to or lower than $10^{-1}$ seconds, and at a temperature comprised between a temperature greater by $10^{\circ}C$ than the melt temperature of said thermoplastic polymer and temperature greater by $20^{\circ}C$ than the melt temperature of the above mentioned synthetic thermoplastic fibres, lower than $1.10^{8}$ poises, but preferably lower than $1.10^{5}$ poises;

(c)   a surface tension not greater by 5 dine/cm than the surface tension of the polymer forming said thermoplastic fibres, measured at the same temperature;

(d)   a solubility parameter that is in a relationship with the solubility parameter of the polymer that forms said thermoplastic fibres, in a ratio of between 0.85 and 1.15, extremes inclusive, said parameters being measured at $25^{\circ}C$.

The presence of a film of such characteristics, interposed between the cellulosic layer of the liner and the tips or peaks of the wave, they too formed by a layer of cellulosic fibres, together with the presence of the layers of thermoplastic fibres immediately adjacent to the two above mention-

...

ed cellulose layers, allow to achieve the adhesion between liner and the tips of the wave at lower temperatures or, at equal temperature, to obtain higher adhesion values than in the case of the adhesion between liner and the wave formed of non-composite cellulose layers or sheets by means of the fusion or melting of a generic thermoplastic film interposed between the liners and the wave.  .

More particularly, it is possible and even preferable, with the above described method, to operate at a temperature greater by $10^{\circ}$C than the melt temperature of the film forming polymer, and at a temperature equal to the melt temperature of the polymer that constitutes the thermoplastic fibres present in the layer of the wave, to be made to adhere by means of the thermoplastic film, when the melt temperature of the polymer forming the film is lower by at least $10^{\circ}$C than the melt temperature of the polymer that forms said thermoplastic fibres.

With temperature values comprised in said preferred range of temperatures, it is possible to obtain the adhesion also at temperatures lower than the melt temperature of said thermoplastic fibres, without destroying however the morphology of said fibres.

As far as the fibrous material that forms the layer adhering to the layer of cellulosic fibres in the sheets forming the "liner" and the wave, is concerned, said fibrous material may consist only of synthetic fibres of at least one thermoplastic polymer, or of blends or mixtures of such fibres with up to 95% by weight on the total mixture of fibres, of fibres of another type, but preferably

. . .

- 6 -

cellulose fibres.

Mineral fillers, pigments and additives usually used in conventional cellulosic papers, may be present in the two layers forming each sheet, admixed to the constituent fibrous material.

Obviously, the sheets constituting the liners and the wave, to be made to adhere on the side of their corresponding cellulosic layers, may consist of more than the two above described fibrous layers, provided that in each one of said composite sheets there be present an outside layer formed of cellulose fibres (which layer is the one destined to adhere), and immediately adhering to said layer, a layer formed of fibres of a synthetic thermoplastic polymer, or formed of a mixture of said fibres having up to 95% by weight of other fibres, but preferably cellulosic fibres.

The remaining layers that constitute the composite sheet may be indifferently formed of synthetic fibres, either thermoplastic or non-thermoplastic, or only of cellulosic fibres, or blends of such said fibres in any wanted proportion.

More particularly, the sheet constituting the wave may consist of three layers, of which the mid one (internal one) consists of fibrous material made up of at least 5% by weight of synthetic fibres of a thermoplastic polymer, while the two external (outside) layers are constituted of cellulosic fibres. In this way both series of wave tips will turn out to consist of one layer of cellulosic fibres and could thus be each coupled with a liner, through the layer of cellulosic fibres of this latter, by means of the above specified thermoplastic polymer and according to the above described pro-

...

cedures.

In figure I are illustrated and respectively marked 1, 2 and 3, the sheet forming the "liner", the wavy or undulated element and the assembly of wavy element and liner, made to adhere to each other through cellulosic layers (a) by means of thermoplastic film (c).
(b) marks the layer of fibrous material consisting of at least 5% by weight of synthetic thermoplastic fibres.

In figure II are illustrated and marked 2 and 3 respectively, the 3-layered wavy sheet, the three layers being marked respectively (a), (b) and (a), where (a) and (b) have the same meaning as that specified in Fig. I and (c) marks the thermoplastic films serving to bind together the two "liners" 1 to the wavy sheet (3).

As far as the thermoplastic film, that should be interposed between the cellulosic layers of the composite sheets, is concerned, said film must have a thickness of at least $20 \mu$ , but in general should be comprised between $20 \mu$ and $200 \mu$ .

More particularly, especially advantageous adhesion conditions, both with regard to low temperatures that may be used as well as for the adhesion values achieved, may be realized when operating with sheets in which the layer of cellulosic fibres only, serving for the binding of the other layers to each other, has a specific weight of between 40 and $120 \text{ g/m}^2$ in correspondence of an apparent density of between 0.6 and 0.8 g./cc, and by interposing between the cellulosic layers of the two sheets a thermoplastic film having a thickness comprised between 20 and 40 microns.

...

Density values for the layer of cellulosic fibres comprised between 0.6 and 0.8 g/cc, may be obtained by carrying out a suitable refining of the cellulose fibres used for the purpose, according to the known techniques of the Prior Art.

The specific weight of the layer of the sheet consisting of or containing at least 5% by weight of thermoplastic fibres, must amount to at least 20 $g/m^2$, but should preferably be comprised between 40 and 120 $g/m^2$.

The preparation of said composite sheets may be achieved by means of the conventional paper-preparation methods, starting from aqueous dispersions or some other inert liquid, of cellulose fibres, or of synthetic thermoplastic fibres or blends thereof with cellulosic fibres, using continous flat-plate or curved plane machires. Preferably there are used aqueous suspensions containing from 0.3 to 1.5% by weight of fibrous material.

The preparation of the assembly or combination of the wavy sheet with a single-face liner, according to the method of this invention, consisting in the steps of: interposition of the thermoplastic film between the liner-forming cellulose layers and the tips of the wave, the heating and compression, may be carried out in one single operation on the undulating (corrugating) group, by feeding to this latter, between the liner and the tips of the wave that has been formed, the thermoplastic polymer film.

For the application of a second liner to the "single face" liner thus obtained, it is possible to work on the "hot plates" by using the thermoplastic film and operating under the above described operational conditions, or by using

...

other methods of continuous or intermittent welding.

As synthetic thermoplastic fibres to be used in the process of this invention, there may be used fibres of the traditional type in the form of staples, but preferably there are used fibrils or fibrids of thermoplastic synthetic polymers having a specific surface area of at least 1 $m^2$/g.

Said fibrils or fibrids are products long known to the skilled in the Art as substituents for cellulose in the preparation of paper or kindred products.

They generally display a length comprised between 1 and 10 mm, with a mean apparent diameter of between 1 and 500 microns.

The fibrils usable in the present process may be obtained according to anyone of the numerous processes described in the technical literature.

In this connection, there may be cited the methods described in British Pat.s Nos. 868,651 and 1,287,917, and in German Pat. Appl. No. 2,208,553, according to which the mentioned fibres, otherwise called "fibrids", are obtained by precipitation of the polymers from their solutions, or else in the course of the polymerization itself of the monomers, operating in the presence of shearing stresses; and, moreover, described in: Brit. Pat. Nos. 891,943 and 1,263,531; US Pat. Nos. 3,770,856, 3,750,383 and 3,808,091; Belgian Pat. No. 789,808 and French Pat. No. 2,176,858 as well as in German Pat. Appl. No. 2,343,543, in which the above mentioned fibrils are obtained in the state of more or less coherent aggregates, or of filament like structures, fibrilled (plexofilaments) by means of extrusion through a

. . .

spinneret of solutions, emulsions or dispersions of polymers into one or more liquid media, under almost instantaneous evaporation conditions of the liquid phase present ("flash--spinning" process). In such a case the fibrous aggregates or plexofilaments thus obtained may be easily disgregated to discontinuous or elementary fibrils possessing a specific surface area of at least 1 $m^2/g$, by means of cutting and/or refining operations.

Other processes, by which it is possible to directly obtain fibrils suited for use in the process of the present invention, are those described in Italian Pat. Nos. 947,919 and 1,030,809 filed in the name of the same Applicant, as well as in Brit. Pat. Nos. 1,353,912 and 1,355,913.

The thermoplastic fibres, and in particular the fibrils or fibrids, may contain incorporated inorganic fillers such as for instance kaolin, talc, titanium dioxide, etc., in quantities of up to 70% by weight of the fibres thus loaded.

Blends of said fibrils with thermoplastic fibres of the conventional type may also be used. As cellulosic fibres there may be used all those fibres which are normally used for preparing paper of the traditional type, based on cellulose or its derivatives.

In the layers of the composite sheets there may be present as partial substituents (less than 50%) of the cellulose fibres, also natural fibres of another type (for instance: wool, asbestos), as well as glass fibres.

When the thermoplastic fibres, which partially or totally constitute the layer adhering to the layer of cellulose fibres destined to the adhesion, are blends of different

...

polymeric fibres, the polymer forming the film to be interposed between the sheets, must satisfy conditions from (a) to (d) as previously herein above defined, with regard to at least one of the types of thermoplastic fibres present (or of the polymer constituting said fibres).

In the case single thermoplastic fibres consist of a mixture of polymers, instead of only one type of polymer, what it said at points (a) to (d) about the melt temperatures, the superficial tension values and the solubility parameters of the polymers constituting the fibres, must be intended as referring to the corresponding values possessed by said mixtures of polymers.

The thermoplastic polymer forming the film may be any film-forming thermoplastic polymer, preferably displaying a cristallinity of at least 20%, provided that it shows the characteristics defined at points from (a) to (d), with respect to the polymeric material constituting the thermoplastic fibres present in the sheets.

Examples of polymers from which a film may be obtained, are: olefinic polymers such as polyethylene and polypropylene; vinyl polymers such as polyvinyl chloride, polyvinyl alcohol, polyvinyl acetate, polymethylacrylate, polystyrene, polyamides, polytetrafluoroethylene, polyester resins and the mixtures of such polymers.

As melt temperature for the polymers there should be applied the temperature at which, at the optical microscope, there will be observed the disappearance in the polymer of the last crystallite.

The solubility parameter of a polymer in the expression

...

the square root of the relationship between the cohesion energy of the molecules and the molar volume, and is often used for determining the compatibility of polymers and solvents.

General methods for its determination are described by J. Bandrup & E.G. Immergut in: "Polymer Handbook", Intersc. Publisher, 1966, paragr. 4, page 341 and following pages.

A particular method for determination, based on the additive principle of the contributes of chemical groups, atoms and bonds (links) present in the molecules, to the total attractive molar forces, has been suggested and describ ed by P.A. Small in: "Journal of Applied Chemistry" No. 3, p. 77, 1953. In the following there will be found the values of solubility parameters at $25^{\circ}C$, of a number of polymers, calculated according to P.A. Small and to which reference is made for the purpose of this invention.

| Polymer | Solubility parameter $\sqrt{cal/cc}$ |
|---|---|
| Polyvinylacetate | 9.22 |
| Polymethylmetacrylate | 9.22 |
| Polyethylene | 8.05 |
| Polystyrene | 9.01 |
| Polypropylene | 9.2 |
| Polytetrafluoroethylene | 6.2 |
| Polyvinyl alcohol | 12.6 |
| Polyvinyl chloride | 10.2 |

The thermoplastic polymer film may be obtained accord-

...

ing to anyone of the traditional methods used for the film-
-forming of polymers such as extrusion, casting, etc.

By referring to the sheets forming the "liner" and the
wave, it can be said that the thermoplastic synthetic·fibres
present in the layer adhering to the cellulosic layer that
must be made to adhere, according to the process of this invention, are preferably derived from thermoplastic polymers
having at least a 20% crystallinity, such as for instance
low or high density polyethylene, polypropylene essentially
consisting of isotactic macromolecules; the ethylene/propylene copolymers, whether statistical or in blocks; poly-4-
-methyl-1-pentene; polyamides; polycarbonates; the vinyl resins such as polyvinyl chloride and polyvinyl acetate; ethylene/vinyl acetate copolymers; acrylic resins in general;
polyesters.

For the heating operation on the composite structure
formed in succession by the liner, the thermoplastic film
and the wavy sheet, when realized in the absence of pressure,
there may be used, for instance, either a hot-air tunnel or
a hot cylinder. However, when operating under pressure instead, there may be used either a press or a calander consisting of a roller of hard material, for instance, of steel.

Preferably, but not necessarily, one operates on calanders working with pressures comprised between 10 and 100
kg/cm$^2$.

As indicated previously herein above, the temperature
at which the heating operation is carried out, is comprised
between a temperature greater by 10$^{\circ}$C than the melt temperature of the polymer forming the film, and a temperature grea-

...

ter by 20°C with respect to the melt temperature of the thermoplastic fibres present in the layer of sheets adhering to the layer of cellulosic sheets intended for adhesion.

The actual temperature at which the treatment will be conducted, shall be chosen, in that range or interval, amongst the temperatures at which the polymer constituting the film will assume the previously established values of: viscosity (b) and superficial tension (c), in case said values should not occur at all the heating temperatures comprised in that temperature interval.

In such a case, the temperature at which to carry out the coupling, can be established on the basis of preliminary determinations of the viscosity and superficial tension carried out on the polymer of the film.

The process, object of the present invention, allows to obtain cardboards of any specific weight. Moreover, the cardboards thus obtained, at equal specific weight, with respect to those made of cellulose only, or of a mixture cellulose/synthetic thermoplastic fibres, display superior mechanical characteristics in the dry, although preserving the same thermoforming capacity of these latter, also at higher specific weights.

The process is, moreover, applicable, with the same substantial advantages, to the coupling of "liners" to the wave, in which liners the thermoplastic synthetic fibres present in the layer adhering to the cellulosic one destined to the adherence, have been previously thermomelted by heating and by possible simultaneous or successive compression of the sheets, and have thereby lost their fibrous morpholo-

...

gy.

The following examples are given for further illustrating the inventive idea of this invention, without, however, limiting in anyway the scope of the invention itself.

EXAMPLE 1

On a two-jet paper machine, and using respectively:

(a)  an aqueous 4% dispersion of Kraft cellulose, refined up to $23^O$ SR;

(b)  a 4% aqueous dispersion of a fibrous blend consisting of 35% by weight of Kraft cellulose and of 65% by weight of polyethylene fibrils of the high-density type (having a m.p. = $130^O$C), with a weight mean length of 3 mm, an apparent diameter of $17\mu$ and a specific surface area of 6 $m^2$/g, with a superficial pre-treatment in order to promote its dispersion in water, with acetylized polyvinyl alcohol, according to the process described in Italian Pat. No. 1,006,878,

two composite sheets were prepared, each consisting of a layer of cellulose fibres having, after drying, a weight of 100 $g/m^2$, a thickness of 160 $\mu$ (corresponding to a specific density of 0.625 g/cc), and by a layer of polyethylene fibrils mixed with cellulose fibres having, after drying, a specific weight of 80 $g/m^2$ and a thickness of 145 microns. The two composite sheets were then conveyed to an undulating or corrugating group, together with a 20 $\mu$ thick film consisting of a low-density polyethylene (d = 0.906 g/cc) showing a melt point of $110^O$C.

Said polyethylene, within the temperature range of $120^O$C – $155^O$C, shows a viscosity below $0.8-10^5$ poises, measured on a

. . .

capillary viscosimeter, under a velocity gradient lower than or equal to $10^{-1}$ seconds, and a surface tension equal to that of the high-density polyethylene that forms the fibrils, while showing a solubility parameter in a ratio of 0.98 with that of the polymer of the fibrils.

In figure III, there are shown; an undulating or corrugating group and the arrangement of the composite sheets and of the film, for the preparation of the liner/wave (single face) assembly.

In said figure III, there is shown sheet 1 that forms the "liner" together with the cellulosic layer (a) and the cellulose/thermoplastic fibres mixture layer (b), sheet 3 destined to form the undulated or corrugated wavy sheet on the undulating group with layers (a) and (b); the embossed rollers 4 and 5 which turn (revolve) in the direction shown by the arrows and which in their whole constitute the undulating group; the polymer film 2, which is interposed between liner 1 and the tips of the wavy element or sheet on roller 5; the I.R. pre-heater 7, for the polymeric film; the wave thermowelded to the liner.

In figure III, by letter R are furthermore marked the feed rollers from which unwind the sheets or above mentioned films. The temperature of the undulating group amounts to $140^{\circ}C$ (+2), while the exerted pressure is equal to 80 kg/cm.

The product obtained (single face) was subjected to adhesion tests of the liner to the wave tips. For that purpose a 5 cm wide strip of "single face" liner, 25 cm long, was cut off. The liner was then manually separated from the wave, starting from the short side. The ends of paper were then inserted

...

into che clamps of an INSTRON dynamometer, which were then moved apart at a rate of 1 cm/second.

The adhesion force liner-to-wave was determined on at least 10 adhesion lines or points between liner and wave.

In this particular instance the adhesion, as the mean value of 10 measurements, proved to be equal to 530 ($\pm$120) g/cm.

EXAMPLE 2

A composite (single face) wave/liner was prepared operating as in example 1, but with the difference that for the wave element and for the "liner", there were used simple Kraft cellulose sheets 288 micron thick and with a specific weight of 180 g/cm$^2$, corresponding to an apparent density of 0.625 g/cc.

The thermoplastic film and the other operational conditions were just like in example 1. The adhesion between "liner" and the wave tips was equal to 180 ($\pm$30) g/cm.

C L A I M S

1) Process for realizing in an undulated type cardboard, the adhesion of "liners" to an undulated element, which consists in using as constituents of the wave and of the liners, sheets consisting of or comprising two superimposed layers, of which one is made of cellulose fibres, while the other, adhering to the former, is made of fibrous material, 5% by weight of which consists of a synthetic thermoplastic polymer, by then putting the liner into contact, through the layer of cellulose fibres, with the wavetips consisting of the layer of cellulose fibres, with the interposition between the liner and said wavetips, of a thermoplastic polymer film having:

(a) a melt temperature or point (m.p.) lower than the melt point of the polymer constituting the synthetic thermoplastic fibres present in the layers adhering to the cellulose fibres of the liner and of the wave, intended for adhesion, and between which is inserted the film;

(b) a viscosity in the molten state, measured in a capillary viscosimeter and under a velocity gradient equal to or lower than $10^{-1}$ second, and at a temperature comprised between a temperature greater by $10^{\circ}C$ than the melt temperature or point of said thermoplastic polymer and a temperature greater by $20^{\circ}C$ than the melt temperature of above mentioned synthetic thermoplastic fibres, lower than $1.10^{8}$ poises;

(c) a superficial tension not exceeding by 5 dine/cm

...

the tension of the polymer that constitutes said thermoplastic fibres, measured at the same temperature;

(d) a solubility parameter which lies with the solubility parameter of the polymer constituting said thermoplastic fibres, in a ratio comprised between 0.85 and 1.15, extremes inclusive, said parameter being measured at $25^{\circ}C$;

and, finally, in heating, possibly under pressure, the composite material thus obtained, at least in correspondence with the points of contact of the liner with the wave tips, at a temperature comprised between a temperature greater by $10^{\circ}C$ than the melt temperature of the polymer of the film, and a temperature greater by $20^{\circ}C$ than the melt temperature of the thermoplastic polymer that constitutes the synthetic fibres present in the wavy element and in the liner.

2) Process according to claim 1, characterized in that the heating of said composite product is carried out at a temperature comprised between a temperature greater by $10^{\circ}C$ than the melt temperature of the polymer that constitutes the film and the melt temperature of the polymer constituting said synthetic thermoplastic fibres when the melt temperature of the polymer of the film is lower by at least $10^{\circ}C$ than the melt temperature of the polymer of said film.

3) Process according to claim 1 or 2, characterized in that said synthetic thermoplastic fibres are at least partly in the form of fibrils having a specific surface

...

area of at least 1 m$^2$/g.

4) Process according to any of claims 1 - 3 , characterized in that the viscosity of the film-forming thermoplastic polymer, in the molten state, is lower than 1.10$^5$ poises.

5) Process according to any of the preceding claims, characterized in that the thermoplastic polymer forming the film is polyethylene.

6) Process according to any of the preceding claims, characterized in that the thermoplastic polymer that forms the film is polyethylene of the low-density type, and that the synthetic thermoplastic fibres present in the layer adjacent to the layer of cellulosic fibres to be made to adhere, are high-density polyethylene fibrils having a specific surface area of at least 1 m$^2$/g.

7) Process according to claim 6, characterized in that the heating operation to be carried out on the assembly, occurs at a temperature comprised between about 120$^\circ$C and about 135$^\circ$C.

8) Process according to any of claims 1-5, characterized in that the thermoplastic polymer that constitutes the film, is a high-density polyethylene, while the synthetic thermoplastic fibres present in the layer adjacent to the layer of the cellulose fibres to be made to adhere, are polypropylene fibrils having a specific superficial area of at least 1 m$^2$/g.

9) Process according to claim 8, characterized in that the heating operation to be carried out on the assembly, occurs at a temperatures comprised between 145$^\circ$ and

. . .

$165^{\circ}$C.

10) Process according to any of the preceding claims, characterized in that the sheets forming the wavy element and/or the "liner", have been submitted to a preliminary heating and possibly to a compression, with the fusion of the synthetic thermoplastic fibres present therein.

11) Process according to any of the preceding claims, characterized in that the cellulosic fibres present in the sheets constituting the wavy element and/or the "liner", have a specific weight comprised between 40 and 120 $g/m^2$ and an apparent density of between 0.6 and 0.8 g/cc.

12) Process according to any of the preceding claims, characterized in that the layer containing synthetic thermoplastic fibres present in the sheets constituting the wavy element and/or liner, and which is adjacent to the layer of cellulosic fibres destined to ensure the adhesion, has a specific weight comprised between 40 and 120 $g/m^2$.

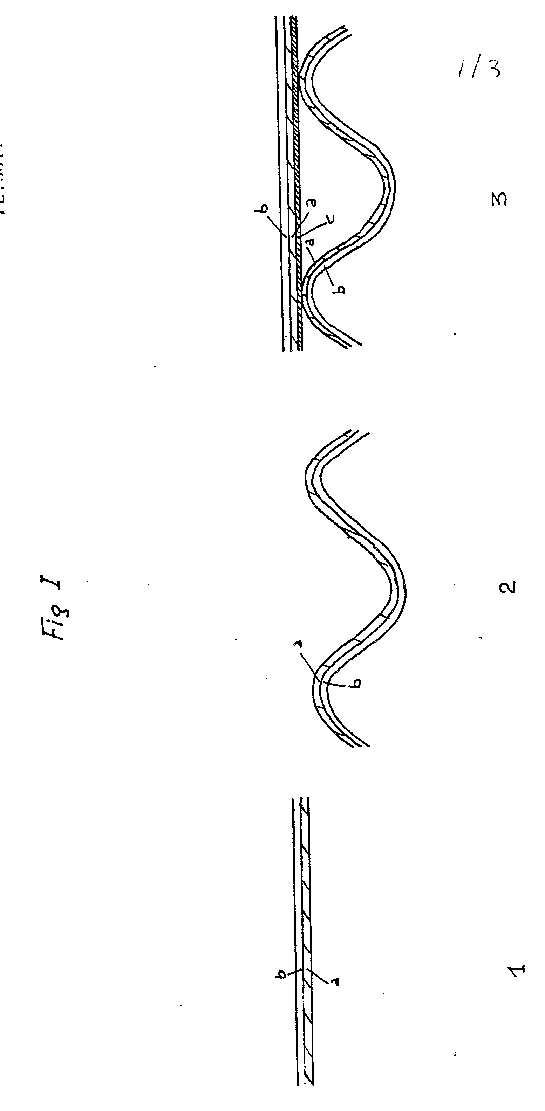

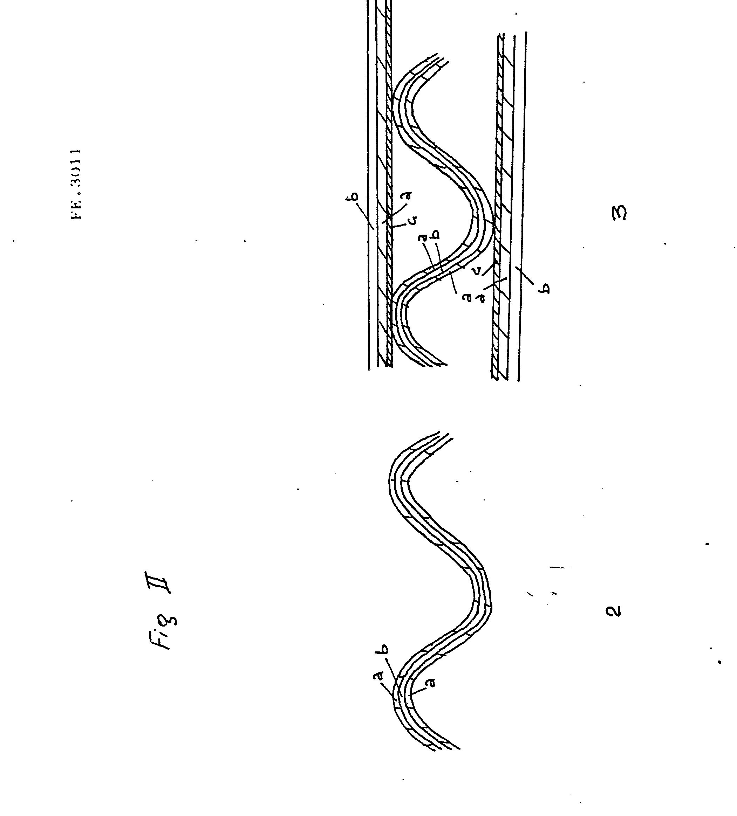

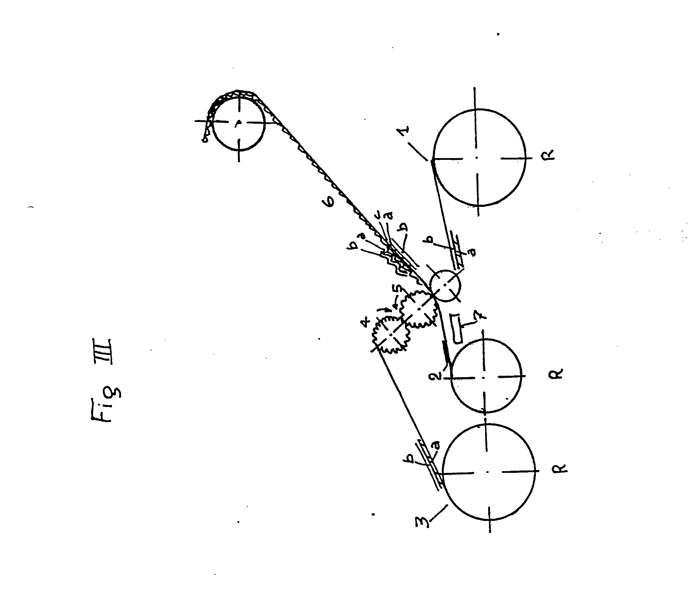

13) Cardboards of the undulated or corrugated type, obtainable by the process of any of claims 1 - 12.

FE.3011

Fig I

1

2

3

FE.3011

Fig II

Fig III